# EUROPEAN PATENT SPECIFICATION

(11) **EP 0 776 462 B1**
(45) Date of publication and mention of the grant of the patent: **22.04.1998**
(21) Application number: 95904502.2
(22) Date of filing: 14.12.1994
(51) Int. Cl.: G01F 15/18, G01F 1/74, G12B 9/08

(54) **DEVICE FOR CARRYING EQUIPMENT THROUGH A CONDUIT AND METHOD FOR USE OF THE DEVICE**
ROHRTRAGVORRICHTUNG FÜR EINE AUSRÜSTUNG
DISPOSITIF SERVANT A TRANSPORTER UN APPAREIL DANS UN CONDUIT ET SON PROCEDE D'UTILISATION

(30) Priority: 15.12.1993 EP 93203537
(43) Date of publication of application: 04.06.1997
(73) Proprietor: SHELL INTERNATIONALE RESEARCH MAATSCHAPPIJ B.V., 2596 HR Den Haag (NL)
(72) Inventor: DEN BOER, Johannis, Josephus, Nl-2288 GD Rijswijk (NL); BROWN, David, NL-2288 GD Rijswijk (NL); VAN DER SPEK, Alexander, Michail, NL-2288 GD Rijswijk (NL)
(74) Representative: Spierenburg, Jan
(86) International application number: EP9404217
(87) International publication number: WO9516898

(56) References cited:
- EP-A- 0 510 774
- GB-A- K11 782
- US-A- 3 306 105
- US-A- 3 999 885

## Description

The present invention relates to a device for carrying equipment, for example a flowmeter, through a conduit and to a method for use of the device. A known equipment carrier device comprises an elongate body for carrying the equipment and a passive centralizing system to position the elongate body in the conduit so that the position of a central axis of the body relative to the position of the longitudinal axis of the conduit is maintained within a predetermined range.

Such an equipment carrier device is for example described in US-A-3 306 105 and in SPE paper No. 5089 entitled 'The full bore flowmeter' by B C Leach, J B Jameson, J J Smolen and Y Nicolas, American Institute of Mining, Metallurgy, and Petroleum Engineers, Inc., 1974. In the known device the passive centralizing system comprises six protective centralizer skids and six centralizer arms, which are with one end connected to the body by axially displaceable hinges, the other end of each arm being mechanically linked to a protective centralizer skid. The protective centralizer skids are pushed against the inner surface of the conduit by the centralizer arms which are actuated by springs. The central axis of the elongate body is maintained within a predetermined range from the longitudinal axis of the conduit by the reaction forces between the outer surface of the protective centralizer skids and the inner surface of the conduit. These reaction forces not only depend on the relative position of the central longitudinal axis of the elongate body but also on uncertain quantities such as variations in spring stiffness and the friction in the axially displaceable hinges. As a result of the presence of three centralizer skids at each end of the known device the magnitudes of the accumulated friction forces between the skids and inner surface of the conduit are high and variations in the spring stiffness of the various skids make a precise positioning of the central axis of the elongate body within the conduit impossible.

It is an object of the present invention to overcome these disadvantages of the known device.

To this end the device according to the present invention comprises:
- an elongate body for carrying equipment;
- a centralizing system to substantially centralize the elongate body in a conduit; which system comprises four support arms joined to the elongate body, each support arm being provided with means for varying the extension of the support arm relative to a central axis of the body;
- wherein the first support arm and the fourth support arm are located at or near the ends of the elongate body and the second support arm and the third support arm are located at or near the middle part of the elongate body.

In a suitable embodiment of the device according to the invention the first and the fourth support arm are arranged in a plane in which the central axis of the elongate body lies, and, when seen in the direction of said central axis, the second and the third support arm are arranged at either side of said plane such that the angle between the second and third support arms is about 120° and the angle between said plane and each of the second and third support arms is about 60°.

When used in this specification the term "about 120°" indicates that the relevant angle is between 100° and 140°, and preferably between 110° and 130°, and the term "about 60°" indicates that the relevant angle is between 40° and 80° and preferably between 50° and 70°.

The centralizing system suitably comprises a position control system that causes the centralizing system to adjust the position of the elongate body if the position of a central axis of the body relative to the longitudinal axis of the conduit is outside a predetermined range, which control system includes a controller, distance measuring devices arranged near each support arm to measure the distance between the inner surface of the conduit and the elongate body, means for transmitting a signal representing the measured distances to the controller, and means for transmitting controller output to the adjusting means. Each distance measuring device measures the distance in a predetermined direction, for example perpendicular to the central axis of the elongate body.

Suitably each distance measuring device comprises a feeler provided with a rotary incremental encoder.

During normal operation the device may be pulled through the conduit. One method is pulling the device with a cable or a pipe string with little torsion stiffness. If it is necessary to maintain the equipment at a predetermined tangential orientation relative to the inner circumference of the conduit, the equipment may be arranged on at least one pipe section which is secured to the elongate body by a bearing which enables said pipe section(s) to rotate relative to the body while remaining in a co-axial position relative to the central axis of the elongate body, and an orientation control system is present which comprises a motor for rotating said pipe section(s) relative to the body in order to maintain the pipe section(s) at a fixed tangential orientation relative to the inner circumference of the conduit.

Alternatively the device may be pulled through the conduit by a string that has a large torsion stiffness, or with a string of which the end is guided. In that case suitably the equipment, the support arms, and the distance measuring devices are arranged on a pipe section which is secured to the body by a bearing which enables said pipe section to rotate relative to the body while remaining in a co-axial position relative to the central axis, and an orientation control system is present which comprises a motor for rotating the pipe section relative to the elongate body to maintain the pipe section at a fixed tangential orientation with respect to the inner circumference of the conduit.

Instead of pulling the device through the conduit, the device of the present invention can also be pushed through the conduit.

The equipment carried by the elongate body suitably includes two flowmeters arranged in the same plane and axially spaced apart at the elongate body. The use of two axially spaced flowmeters allows determining the flowrate of fluid flowing through the wall of the conduit into a volume element having a diameter equal to the diameter of the conduit and a length equal to the distance between the two flowmeters.

The invention further relates to a method of using the device according to the invention for detecting the presence of a leak in a conduit.

The method comprises:
(a) providing the device according to the invention with equipment comprising two axially spaced flowmeters;
(b) moving the device in a longitudinal direction through a conduit;
(c) measuring substantially contemporaneously the flowrates of fluids passing through each of the flowmeters; and
(d) detecting the presence of a leak in the conduit by calculating the difference, if any, between the two flowrates.

To allow measuring multiphase flow, in particular the flow of oil, gas and water, through the conduit the equipment may include a multiphase flowmeter, such as a multi-capacitance multiphase flowmeter as described in European patent application publication No. 510 774.

The invention will now be described by way of example in more detail with reference to the drawings, wherein
Figure 1 shows schematically a side view of the device according to the present invention within a conduit which is shown in a longitudinal sectional view; and
Figure 2 shows a frontal view of the device and a cross-section of the conduit taken along line II-II of Figure 1 when seen in the direction of the arrows.

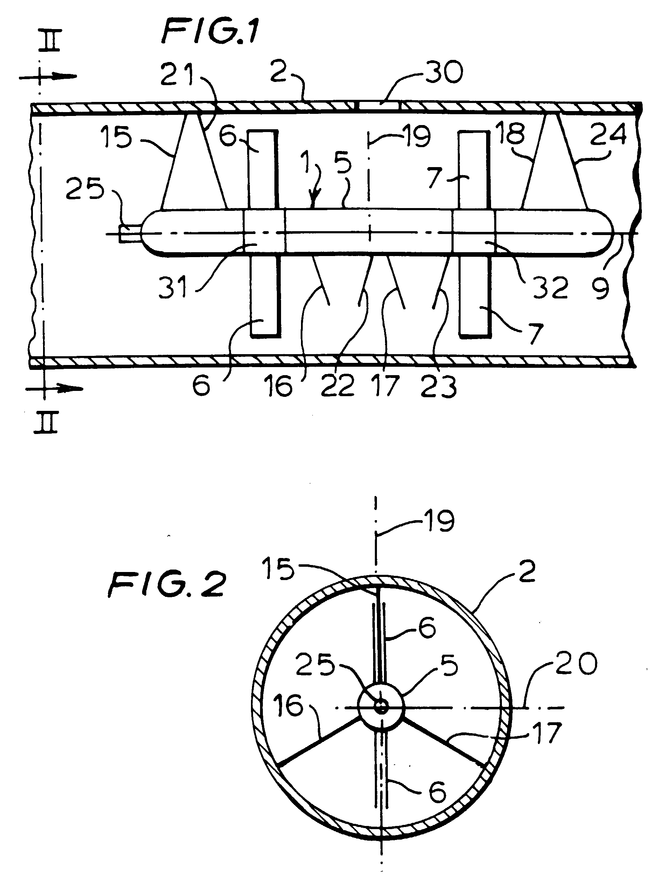

Reference is now made to Figures 1 and 2. These Figures show an equipment carrier device 1 which is located within a tubular conduit in the form of a pipe 2.

The device 1 comprises an elongate body 5 provided with equipment in the form of two flowmeters 6 and 7. The flowmeters 6 and 7 are multiphase multi-capacitance flowmeters of the type described in European patent application publication No. 510 774, which is incorporated herein by way of reference.

The device 1 further comprises a centralizing system to substantially centralize the elongate body 5 in the pipe 2, which system includes a position control system (not shown) that causes the centralizing system to adjust the position of the elongate body 5 if the position of a central axis 9 of the body 5 relative to the longitudinal axis of the pipe 2 is outside a predetermined range. In Figures 1 and 2 the central axis 9 of the body 5 coincides with the longitudinal axis of the pipe. It will be understood that the longitudinal axis of the pipe is the axis of symmetry at the centre of the pipe and that the central axis of the elongate body is, if the body has a generally cylindrical shape (as shown), the axis of symmetry at the centre of a cylinder that envelopes the outer surface of the body.

The centralizing system comprises four support arms 15, 16, 17 and 18 joined to the elongate body 5. Each support arm 15, 16, 17 and 18 is provided with adjusting means (not shown) controlled by the position control system to adjust the radial extension of the tips of each of the support arms 15, 16, 17 or 18 relative to the central axis 9 of the body 5. The adjusting means can be a servo controlled motor which can adjust the angle between the support arm and the central axis 9 of the elongate body 5; or it can be a device that can adjust the length of the support arm. The first support arm 15 and the fourth support arm 18 are located near the ends of the elongate body 5, and they are arranged in a plane in which the central axis 9 of the elongate body 5 lies. This plane coincides with the plane of drawing of Figure 1. The second support arm 16 and the third support arm 17 are located near the middle part of the elongate body 5, and the angle between each of the two support arms 16 or 17 and the first support arm 15 is 120°.

The support arms 15, 16, 17 and 18 substantially centralize the elongate body 5 within the pipe 2 such that the central axis 9 of the body substantially coincides with the longitudinal axis of the pipe 2. This can be understood as follows. A body has generally six degrees of freedom, three rotations and three translation. However, in this case the translation in the direction of the central axis 9 and the rotation about the central axis 9 are irrelevant. Consequently the elongate body 5 has only four degrees of freedom: two rotations about mutual perpendicular axes 19 and 20 which are perpendicular to the central axis 9 and two translations in the directions of the axes 19 and 20. The four support arms 15, 16, 17 and 18 cooperating with the curved inner surface of the pipe 2 are sufficient to constrain the two rotations and the two translations.

The position control system includes a controller (not shown), distance measuring devices in the form of feelers 21, 22, 23 and 24 provided with rotary incremental encoders (not shown) arranged at the body 5 near each support arm 15, 16, 17 and 18 to measure the distance between the inner surface of the pipe 2 and the central axis 9 of the body 5, means (not shown) for transmitting a signal representing the measured distances to the controller, and means (not shown) for transmitting controller output to the adjusting means of the support arms 15, 16, 17 and 18.

The body 5 is further provided with a connector 25 to secure the body 5 to a cable (not shown) for pulling the body 5 through the pipe 2. Said cable may be provided with leads through which electric energy is supplied for powering the active centralizing system, the position control system, and the flowmeters 6 and 7, and leads through which the signals from the flowmeters 6 and 7 are transmitted to a signal processing device (not shown) which may be mounted outside the pipe 2. The connector 25 is provided with means to connect the leads in the pull cable to corresponding leads (not shown) in the elongate body 5.

During normal operation the body 5 is pulled through the pipe 2 at a predetermined velocity. The two flowmeters 6 and 7 define a volume element having a diameter equal to the internal diameter of the pipe 2 and a length equal to the distance between the two flowmeters 6 and 7. The downstream flowmeter 6 measures the flowrate of the fluids in the pipe 2 leaving the volume element and the upstream flowmeter 7 measures the flowrate of the fluids entering the volume element. A difference between the flowrates measured by the two flowmeters 6 and 7 will indicate that there is a leak in the wall of the pipe 2 and the difference equals the fluid flow through the leak, which fluid flow can be into or out of the volume element. In Figure 1 the opening through which fluid leaks is referred to with reference numeral 30. The terms 'upstream' and 'downstream' refer to the positions of the flowmeters relative to the direction of the fluid flow through the pipe 2; in Figure 1 the fluid flow through the pipe is from right to left.

It will be understood that in determining the absolute magnitude of the flowrate the velocity at which the body 5 is pushed or pulled through the pipe 2 has to be taken into account.

The feelers 21, 22, 23 and 24 are provided with rotary incremental encoders which provide signals that represent the distances between the outer surface of the body 5 and the inner surface of the pipe 2. These distances are used to determine the position of the central axis 9 of the body 5 with respect to the position of the longitudinal axis of the pipe 2. If the position of the central axis 9 relative to the longitudinal axis of the pipe 2 is outside a predetermined range, the position control system causes the arms 15, 16, 17 and 18 of the active centralizing system to adjust the position of the body 5 so that the position of its central axis 9 relative to the position of the longitudinal axis of the pipe 2 is within the predetermined range. To this end the position control system determines which of the four support arms 15, 16, 17 and/or 18 has to be adjusted and to which extent, it then activates the relevant support arm or support arms.

In the above an application has been described wherein the device is used for measuring fluid flow through a conduit in the form of a pipe 2, such as a well tubular. The conduit can also be an open borehole traversing an underground formation. The device of the present invention can be suitable for use in an open borehole traversing an underground hydrocarbon bearing formation, as it will allow to determine in situ the influx of fluids into the borehole. The device is very suitably used in a horizontal borehole.

The device of the present invention can also be used to carry equipment through a pipeline, in which case the device may be pushed or pulled through the pipeline by means of a piston or pig driven by the fluid flow through the pipeline.

In the device as shown in Figure 1 the second support arm 16 and the third support arm 17 are located near the middle part of the elongated body 5 at different distances from the first support arm 15. To allow using a shorter elongate body, the second and third support arm can be arranged at the same distance from the first support arm. The same applies to the feelers 22 and 23.

The free ends of the support arms 15-18 may be provided with wheels or skates (not shown) to facilitate an easy movement of the arms 15-18 along the inner surface of the pipe 2.

As shown in Figure 1 the flow meters 6 and 7 are mounted on pipe sections 31 and 32 which are arranged co-axially around the central axis 9 of the elongate body 5 and which can rotate relative to the body 5 about the central axis 9 in order to maintain the flow meters 6 and 7 at or near a selected angular orientation relative to a reference plane, which plane is referred to as the norm. The norm can be a vertical plane in which the longitudinal axis of the pipe 2 lies or a plane oriented at a predetermined angle from such vertical plane. To ensure that the flowmeters 6 and 7 are maintained within a predetermined angle from the norm, the flowmeters 6 and 7 are arranged on rotatable pipe sections 31 and 32, respectively, which are arranged coaxially with the central axis 9 of the elongate body 5. The rotatable pipe sections 31 and 32 are joined rotatably with the elongate body 5 by bearings which allow the pipe sections 31, 32 to rotate relative to the body 5 while remaining co-axial to the central axis 9. The elongate body 5 further comprises an orientation control system (not shown) which comprises a gyro-compass (not shown) and a motor (not shown) for rotating the pipe sections 31,32 relative to the body 5 if the gyro-compass senses that the orientation of the flowmeters 6 and 7 deviates from the norm.

In an alternative embodiment (not shown) of the device according to the invention the device is pulled through the pipe by a pipe string (not shown) that has a large torsion stiffness, or by a string of which the end is guided. In that case the tangential orientation of the end of the string relative to the inner circumference of the pipe 2 is determined, and consequently the angular position of the elongate body connected to the end of the string by means of the connector is determined as well. In other words the elongate body cannot rotate about the longitudinal axis of the pipe 2. In this case it is advantageous to arrange the equipment, the support arms, and the distance measuring devices on an elongate pipe section (not shown), which pipe section is arranged coaxially with the central axis of the elongate body and joined rotatably with it by bearings, wherein the device further includes an orientation control system comprising a motor to rotate the pipe section relative to the elongate body and the inner circumference of the pipe 2 if the orientation of the equipment deviates from the norm.

Alternatively the elongate body may be connected to the end of the pipe string by a bearing and a servo-controlled motor is present for rotating the elongate body, together with the equipment and support arms, relative to the end of the pipe string if a gyro-sensor senses that the orientation of the equipment deviates from a vertical reference plane in which the central axis 9 of the elongate body lies.

It will be understood that in an alternative embodiment of the invention (not shown) the four support arms may consist of calipers in the form of bowable spring blades of which the ends are connected to nuts that are mounted at opposite ends of a spindle which is rotatably secured to the elongate body such that the spindle is rotatable about the central axis of the body.

Each spindle may be actuated by a motor such that if the spindle rotates in one direction the blade stretches and if the spindle rotates in the opposite direction the blade is bowed such that a mid-section of the blade is moved away from the central axis of the elongate body. In that case the rotation of the spindle relative to the elongate body may be monitored to measure the extension of said mid-section of the blade relative to the central axis, and, in case said mid-section touches the inner wall of the conduit, to measure the position of the elongate body within the conduit.

If the second and third support arms consist of bowable blades and are both mounted at the middle part of the elongate body then the ends of these arms may be connected to a pair of nuts which are mounted on a single spindle.

Instead of using bowable spring blades for forming the calipers, each caliper may also be made of two stiff sections that are at one end interconnected by an elbow-joint and at another end connected by a knuckle-joint to a nut which is mounted on a spindle that is actuated in the same way as described with reference to the bowable spring blades.

Instead of actuating each spindle by a motor, one or more spindles may be actuated by a torsion spring which is released when the device has reached the area of the conduit where measurements are to be taken.

It will further be understood that if several pieces of equipment have to be carried through a conduit several equipment carrier devices may be used which carry each one or more pieces of equipment. In that case the elongate bodies of adjacent equipment carrier devices may be interconnected by a universal joint. In this way a train of equipment carrier devices may be formed. The presence of a support arm at or near each end of the elongate body and a pair of support arms at or near the middle part of the elongate body of each device ensures that each section of the whole train of equipment carrier devices is centralized within the conduit, even if the conduit is curved and/or has an irregular or unround inner surface.

While several embodiments of the invention have been shown and/or described, it will be understood that the invention is not limited thereto since many modifications may be made and will be apparent to those skilled in the art.

## Claims

1. An equipment carrier device (1) comprising:
- an elongate body (5) for carrying equipment (6,7);
- a centralizing system to substantially centralize the elongate body in a conduit, which system comprises four support arms (15-18) joined to the elongate body (5), each support arm being provided with means for varying the extension of the support arm relative to a central axis (9) of the body;
- wherein the first support arm (15) band the fourth support arm (18) are located at or near the ends of the elongate body (5) and the second support arm (16) and the third support arm (17) are located at or near the middle part of the elongate body (5).

2. Device according to claim 1, wherein the first (15) and the fourth (18) support arm are arranged in a plane in which the central axis (9) of the elongate body (5) lies.

3. Device according to claim 2, wherein, when seen in the direction of the central axis (9) of the body (5), the second (16) and the third (17) support arms are arranged at either side of said plane, the angle between the second (16) and third (17) support arms is about 120°, and the angle between said plane and each of the second and third support arms is about 60°.

4. Device according to any one of the claims 1-3, wherein the centralizing system comprises a position control system (21-24) that causes the centralizing system to adjust the position of the elongate body (5) if the position of a central axis (9) of the body relative to the longitudinal axis of the conduit (2) is outside a predetermined range, which control system includes a controller, distance measuring devices arranged on the elongate body near one or more support arms to measure the distance between the inner surface of the conduit and the body, means for transmitting a signal representing the measured distances to the controller, and means for transmitting controller output to the adjusting means.

5. Device according to claim 4, wherein each distance measuring device comprises a feeler (21-24) provided with a rotary incremental encoder.

6. Device according to anyone of the claims 1-5, wherein the equipment is mounted on at least one pipe section (2), which is secured to the elongate body (5) by a bearing which enables said pipe section(s) to rotate relative to the body while remaining in a co-axial position relative to the central axis of the body, and an orientation control system is provided which comprises a motor for rotating said pipe section(s) relative to the body.

7. Device according to claim 4 or 5, wherein the equipment, the support arms (15-18), and the distance measuring devices are arranged on a pipe section (2), which is secured to the elongate body (5) by a bearing which enables said pipe section to rotate relative to the body while remaining in a co-axial position relative to the central axis of the body, and an orientation control system is provided which comprises a motor for rotating the pipe section relative to the body.

8. Device according to anyone of the claims 1-7, wherein the equipment includes a flowmeter (6,7) for measuring the flow rate of fluid(s) passing through the conduit (2).

9. Method of using of the device according to claim 8 for detecting the presence of a leak in a conduit (2), comprising:
(a) providing the device with two axially spaced flowmeters (6,7);
(b) displacing the device in longitudinal direction through a conduit;
(c) measuring substantially contemporaneously the flowrates of fluids passing through the flowmeters (6,7); and
(d) detecting the presence of a leak in the wall of the conduit by calculating the difference, if any, between the two measured flowrates.

10. Method according to claim 9, wherein the flowmeters (6,7) are multiphase multi-capacitance flowmeters.

## Patentansprüche

1. Gerätebeförderungsvorrichtung (1), mit:
- einem langgestreckten Körper (5) zum Befördern von Geräten (6, 7);
- einem Zentrierungssystem zum im wesentlichen Zentrieren des langgestreckten Körpers in einer Leitung; welches System vier Stützarme (15-18) aufweist, die mit dem langgestreckten Körper (5) verbunden sind, wobei jeder Stützarm mit Mitteln zum Verändern der Erstreckung des Stützarmes relativ zu einer Mittelachse (9) des Körpers ausgestattet ist;
- wobei der erste Stützarm (15) und der vierte Stützarm (18) an oder nahe den Enden des langgestreckten Körpers (5) und der zweite Stützarm (16) und der dritte Stützarm (17) an oder nahe dem Mittelteil des langgestreckten Körpers (5) angeordnet sind.

2. Vorrichtung nach Anspruch 1, bei welcher der erste Stützarm (15) und der vierte Stützarm (18) in der Ebene angeordnet sind, in welcher die Mittelachse (9) des langgestreckten Körpers (5) liegt.

3. Vorrichtung nach Anspruch 2, bei welcher der zweite Stützarm (16) und der dritte Stützarm (17) in Richtung der Mittelachse (9) des Körpers (5) gesehen auf beiden Seiten der genannten Ebene liegen, wobei der Winkel zwischen dem zweiten Stützarm (16) und dem dritten Stützarm (17) etwa 120° und der Winkel zwischen der genannten Ebene und jeweils dem zweiten Stützarm bzw. dem dritten Stützarm etwa 60° beträgt.

4. Vorrichtung nach einem der Ansprüche 1-3, bei welcher das Zentrierungssystem ein Positionssteuerungssystem (21-24) umfaßt, das das Zentrierungssystem dazu veranlaßt, die Position des langgestreckten Körpers (5) nachzustellen, wenn die Position einer Mittelachse (9) des Körpers relativ zur Längsachse der Leitung (2) außerhalb eines vorgegebenen Bereiches liegt, welches Steuerungssystem ein Steuergerät, Abstandsmeßeinrichtungen, die auf dem langgestreckten Körper nahe einem oder mehreren Stützarmen zum Messen des Abstandes zwischen der Innenoberfläche der Leitung und dem Körper angeordnet sind, Mittel zum Übertragen eines die gemessenen Abstände repräsentierenden Signals zum Steuergerät, und Mittel zum Übertragen der Steuergerätausgangssignale zu den Nachstellmitteln aufweist.

5. Vorrichtung nach Anspruch 4, bei welcher jede Abstandsmeßeinrichtung einen Fühler (21-24) aufweist, der mit einem Drehschrittkodierer ausgestattet ist.

6. Vorrichtung nach einem der Ansprüche 1-5, bei welcher die Geräte auf zumindest einem Rohrabschnitt (2) montiert sind, der am langgestreckten Körper (5) über ein Lager befestigt ist, welches ermöglicht, daß sich der/die Rohrabschnitt(e) relativ zum Körper drehen können, während gleichzeitig eine koaxiale Stellung relativ zur Mittelachse des Körpers beibehalten wird, und ein Orientierungssteuerungssystem vorgesehen ist, welches einen Motor zum Drehen des/der Rohrabschnitte(s) relativ zum Körper umfaßt.

7. Vorrichtung nach Anspruch 4 oder 5, bei welcher die Geräte, die Stützarme (15-18) und die Abstandsmeßeinrichtungen auf einem Rohrabschnitt (2) angeordnet sind, welcher am langgestreckten Körper (5) über ein Lager befestigt ist, das es ermöglicht, daß sich der Rohrabschnitt relativ zum Körper drehen kann, während gleichzeitig eine koaxiale Stellung relativ zur Mittelachse des Körpers beibehalten wird, und ein Orientierungssteuerungssystem vorgesehen ist, welches einen Motor zum Drehen des Rohrabschnittes relativ zum Körper umfaßt.

8. Vorrichtung nach einem der Ansprüche 1-7, bei welcher die Geräte ein Durchflußmeßgerät (6, 7) zum Messen der Strömungsrate des/der durch die Leitung (2) hindurchtretenden Fluide(s) umfassen.

9. Verfahren zur Verwendung der Vorrichtung nach Anspruch 8 zum Erkennen der Anwesenheit eines Leckes in einer Leitung (2), mit den Schritten:
(a) Zurverfügungstellen der Vorrichtung mit zwei axial beabstandeten Durchflußmeßgeräten (6, 7);
(b) Verschieben der Vorrichtung in Längsrichtung durch eine Leitung;
(c) im wesentlichen gleichzeitiges Messen der Strömungsraten der durch die Durchflußmeßgeräte (6, 7) strömenden Fluide; und
(d) Erkennen der Anwesenheit eines Leckes in der Wand der Leitung durch Berechnen der Differenz, soferne vorhanden, zwischen den beiden gemessenen Strömungsraten.

10. Verfahren nach Anspruch 9, bei welcher die Strömungsmeßgeräte (6, 7) Mehrphasen-Multikapazitäts-Strömungsmeßgeräte sind.

## Revendications

1. Dispositif de transport d'équipement (1), comportant:
- un corps allongé (5) pour transporter de l'équipement (6, 7);
- un système de centrage pour essentiellement centrer le corps allongé dans un conduit, lequel système comporte quatre bras de support (15-18) reliés au corps allongé (5), chaque bras de support étant doté de moyens pour modifier l'extension du bras de support par rapport à un axe central (9) du corps;
- dans lequel le premier bras de support (15) et le quatrième bras de support (18) sont situés sur ou près des extrémités du corps allongé (5), et le deuxième bras de support (16) et le troisième bras de support (17) sont situés sur ou près de la partie centrale du corps allongé (5).

2. Dispositif selon la revendication 1, dans lequel le premier (15) et le quatrième (18) bras de support sont agencés dans un plan dans lequel se trouve l'axe central (9) du corps allongé (5).

3. Dispositif selon la revendication 2, dans lequel, lorsqu'on les voit dans la direction de l'axe central (9) du corps (5), le deuxième (16) et le troisième (17) bras de support sont agencés de chaque côté dudit plan, l'angle entre le deuxième (16) et le troisième (17) bras de support étant d'environ 120°, et l'angle entre ledit plan et chacun parmi le deuxième et le troisième bras de support est d'environ 60°.

4. Dispositif selon l'une quelconque des revendications 1 à 3, dans lequel le système de centrage comporte un système de commande de la position (21-24) qui fait ajuster la position du corps allongé (5) par le système de centrage si la position d'un axe central (9) du corps par rapport à l'axe longitudinal du conduit (2) est à l'extérieur d'une plage prédéterminée, lequel système de commande comporte un dispositif de commande, des dispositifs de mesure de distance agencés sur le corps allongé à proximité d'un ou de plusieurs bras de support pour mesurer la distance entre la surface interne du conduit et le corps, des moyens pour transmettre au dispositif de commande un signal représentant les distances mesurées, et des moyens pour transmettre aux moyens d'ajustement la sortir du dispositif de commande.

5. Dispositif selon la revendication 4, dans lequel chaque dispositif de mesure de distance comporte un palpeurs (21-24) doté d'un encodeur rotatif incrémentiel.

6. Dispositif selon l'une quelconque des revendications 1 à 5, dans lequel l'équipement est monté sur ou moins un tronçon de tube (2) qui est fixé sur le corps allongé (5) par un palier qui permet audit ou audits tronçons de tube de tourner par rapport au corps tout en restant dans une position coaxiale par rapport à l'axe central du corps, et il est prévu un système de commande de l'orientation qui comporte un moteur servant à faire tourner ledit ou lesdits tronçons de tube par rapport au corps.

7. Dispositif selon les revendications 4 ou 5, dans lequel l'équipement, les bras de support (15-18) et les dispositifs de mesure de distance sont agencés sur un tronçon de tube (2) qui est fixé sur le corps allongé (5) par un palier qui permet audit tronçon de tube de tourner par rapport au corps tout en restant dans une position coaxiale par rapport à l'axe central du corps, et il est prévu un système de commande de l'orientation qui comporte un moteur servant à faire tourner le tronçon de tube par rapport au corps.

8. Dispositif selon l'une quelconque des revendications 1 à 7, dans lequel l'équipement comporte un débitmètre (6, 7) pour mesurer le débit du ou des fluides traversant le conduit (2).

9. Procédé d'utilisation du dispositif selon la revendication 8 pour détecter la présence d'une fuite dans un conduit (2), comportant les étapes consistant à:
(a) doter le dispositif de deux débitmètres (6, 7);
(b) déplacer le dispositif dans la direction longitudinale à travers un conduit;
(c) mesurer de manière essentiellement simultanée les débits de fluide traversant les débitmètres (6, 7); et
(d) détecter la présence d'une fuite dans la paroi du conduit en calculant la différence éventuelle entre les deux débits mesurés.

10. Procédé selon la revendication 9, dans lequel les débitmètres (6, 7) sont des débitmètres multiphase à plusieurs capacitances.
